(19) Europäisches Patentamt / European Patent Office / Office européen des brevets

(11) **EP 3 181 943 A1**

## EUROPEAN PATENT APPLICATION
published in accordance with Art. 153(4) EPC

(43) Date of publication:
**21.06.2017 Bulletin 2017/25**

(21) Application number: **15831952.5**

(22) Date of filing: **07.08.2015**

(51) Int Cl.:
*F16F 15/02* (2006.01)      *B60G 13/10* (2006.01)
*B60G 17/08* (2006.01)      *B62K 25/08* (2006.01)
*F16F 15/027* (2006.01)

(86) International application number:
**PCT/JP2015/072489**

(87) International publication number:
**WO 2016/024539 (18.02.2016 Gazette 2016/07)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **11.08.2014 JP 2014163399**

(71) Applicant: **KYB Corporation**
**Tokyo 105-6111 (JP)**

(72) Inventor: **KURITA, Norihiko**
**Tokyo 105-6111 (JP)**

(74) Representative: **Grünecker Patent- und**
**Rechtsanwälte**
**PartG mbB**
**Leopoldstraße 4**
**80802 München (DE)**

(54) **SUSPENSION DEVICE**

(57) A suspension device 1 includes a damper D having an extension-side chamber R1 and a contraction-side chamber R2, an air spring A that exerts a resilient force in a direction in which the damper D is extended, and a control part C that independently adjusts the pressures of the extension-side chamber R1 and the contraction-side chamber R2 to control a force exerted by the damper D. The control part C makes the damper D exert a balancing force Fb against the resilient force of the air spring A in a predetermined stroke range of the air spring A.

FIG. 1

EP 3 181 943 A1

**Description**

TECHNICAL FIELD

The present invention relates to a suspension device.

BACKGROUND ART

As a suspension device that is interposed between a vehicle body and a vehicle wheel in a vehicle, there is, for example, a front fork which includes an outer tube, an inner tube that is slidably inserted into the outer tube, and a damper provided between the inner tube and the outer tube.

A coil spring is interposed between the inner tube and the outer tube of the front fork. The coil spring elastically supports the vehicle body as a suspension spring, and biases the front fork in the extension direction.

In the front fork, the suspension spring is a constituent element that is essential for supporting the vehicle body. However, recently, a front fork using an air spring instead of a coil spring as the suspension spring in order to decrease the weight of the vehicle has been proposed by, for example, JP2010-164167A.

SUMMARY OF INVENTION

An air spring is formed by sealing a gas of a predetermined pressure in an air chamber constituted by the space formed by the inner tube and the outer tube. An air spring exerts a biasing force according to the air pressure within the air chamber even in a state in which the front fork has reached maximum extension.

In the case that the suspension spring is a coil spring, in a state in which the front fork has reached maximum extension, the coil spring is in the state of its natural length or in a state close thereto, and thus the coil spring does not exert much of a resilient force. Meanwhile, in an air spring, the air pressure within the air chamber is set to a high pressure for supporting the weight of the vehicle body, and thus the air spring exerts a large resilient force in the extension direction even if the front fork is in a state of maximum extension.

Therefore, if an air spring is used instead of a coil spring as the suspension spring, the occupant of the vehicle may receive the impression that the underbody is stiff unless some kind of measure is taken. Such an impression is not preferable in terms of the riding comfort of the vehicle.

Thus, a front fork in which the suspension spring is an air spring further includes a coil spring called a balance spring. A balance spring is provided to offset the resilient force of the air spring when the front fork is in a state of maximum extension. Specifically, the balance spring exerts a resilient force against the resilient force of the air spring in a predetermined stroke range from the state in which the front fork has reached maximum extension.

In this way, by providing such a balance spring, the riding comfort of the vehicle can be improved. However, even if the weight is reduced by using an air spring as the suspension spring, the weight increases due to the provision of the balance spring, and thus the weight reducing effect decreases.

An object of the present invention is to provide a suspension device which achieves a high weight reducing effect.

According to one aspect of the present invention, a suspension device includes: a damper having an extension-side chamber and a contraction-side chamber; an air spring configured to exert a resilient force in a direction in which the damper is extended; and a control part configured to independently adjust pressures of the extension-side chamber and the contraction-side chamber to control a force exerted by the damper. The control part makes the damper exert a balancing force against the resilient force of the air spring in a predetermined stroke range of the air spring.

BRIEF DESCRIPTION OF DRAWINGS

    FIG. 1 is a constitutional view of a suspension device according to an embodiment of the present invention;
    FIG. 2 is a circuit constitution view of a damper; and
    FIG. 3 is a flowchart illustrating the processing procedure of a control part of the suspension device according to the embodiment of the present invention.

DESCRIPTION OF EMBODIMENTS

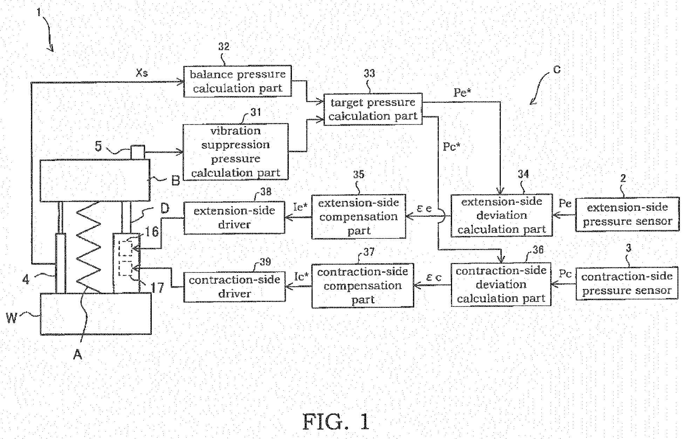

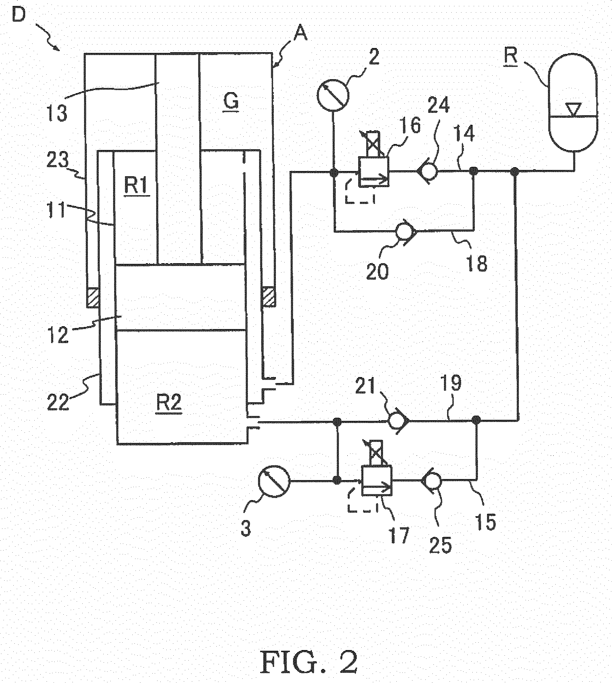

A suspension device 1 according to an embodiment of the present invention will now be explained below with reference to the drawings. As shown in FIGS. 1 and 2, the suspension device 1 includes the following: a damper D having an extension-side chamber R1 and a contraction-side chamber R2; an air spring A that exerts a resilient force in a direction in which the damper D is extended; and a control part C that independently adjusts the pressures of the extension-side chamber R1 and the contraction-side chamber R2 to control the force exerted by the damper D.

The damper D is interposed between a sprung member B and an unsprung member W of the vehicle, and exerts a damping force to suppress vibration of the sprung member B and the unsprung member W.

Hereinafter, each part will be explained. As shown in FIG. 2, the damper D includes the following: a cylinder 11; a piston 12 that is slidably inserted into the cylinder 11; a piston rod 13 that is movably inserted into the cylinder 11 and connected to the piston 12; the extension-side chamber R1 and the contraction-side chamber R2 that are partitioned by the piston 12 within the cylinder 11 and are filled with a fluid; an extension-side pressure control passage 14 and a contraction-side pressure control passage 15 that establish communication between the extension-side chamber R1 and the contraction-side chamber R2; an extension-side pressure control valve 16, which is an electromagnetic valve provided in the extension-side pressure control passage 14; a contraction-side pressure control valve 17, which is an electromagnetic valve provided in the contraction-side pressure control passage 15; a reservoir R that stores the fluid; an extension-side suction passage 18 that establishes communication between the extension-side chamber R1 and the reservoir R; a contraction-side suction passage 19 that establishes communication between the contraction-side chamber R2 and the reservoir R; an extension-side check valve 20 that is provided in the extension-side suction passage 18, and permits only the flow of fluid from the reservoir R toward the extension-side chamber R1; a contraction-side check valve 21 that is provided in the contraction-side suction passage 19, and permits only the flow of fluid from the reservoir R toward the contraction-side chamber R2; an extension-side control passage check valve 24 that is provided in the extension-side pressure control passage 14, and permits only the flow of fluid from the extension-side pressure control valve 16 toward the reservoir R; and a contraction-side control passage check valve 25 that is provided in the contraction-side pressure control passage 15, and permits only the flow of fluid from the contraction-side pressure control valve 17 toward the reservoir R. As the fluid, in addition to hydraulic oil, water, an aqueous solution, and a gas may be used.

When the damper D of the above-described constitution is in the extension stroke, the pressure in the extension-side chamber R1, which is compressed by the piston 12, rises and the fluid moves from the extension-side chamber R1 through the extension-side pressure control valve 16 to the contraction-side chamber R2. Fluid in an amount equivalent to the volume of the piston rod 13 that has retreated from the cylinder 11 is supplied to the contraction-side chamber R2 from the reservoir R via the contraction-side check valve 21. Herein, the pressure of the extension-side chamber R1 is controlled by the valve-opening pressure of the extension-side pressure control valve 16. The valve-opening pressure of the extension-side pressure control valve 16 is adjusted by controlling a current that is supplied to the extension-side pressure control valve 16. Therefore, by adjusting the valve-opening pressure of the extension-side pressure control valve 16, the damping force of the damper D during the extension stroke can be controlled.

On the other hand, when the damper D is in the contraction stroke, the pressure in the contraction-side chamber R2, which is compressed by the piston 12, rises and the fluid moves from the contraction-side chamber R2 through the contraction-side pressure control valve 17 to the extension-side chamber R1. Fluid in an amount equivalent to the volume of the piston rod 13 that has advanced into the cylinder 11 is stored in the reservoir R. Herein, the pressure of the contraction-side chamber R2 is controlled by the valve-opening pressure of the contraction-side pressure control valve 17. The valve-opening pressure of the contraction-side pressure control valve 17 is adjusted by controlling a current that is supplied to the contraction-side pressure control valve 17. Therefore, by adjusting the valve-opening pressure of the contraction-side pressure control valve 17, the damping force of the damper D during the contraction stroke can be controlled.

A cylindrical air piston 22 is provided on the outer periphery of the cylinder 11 of the damper D. The top end of the air piston 22 is closed, and a portion of the extension-side pressure control passage 14 is formed by the gap between the cylinder 11 and the air piston 22.

Further, a cylindrical air chamber 23, into which the air piston 22 is slidably inserted, is provided at the top end in FIG. 2 of the piston rod 13. A gas of a predetermined pressure is filled into a space formed between the air chamber 23 and the air piston 22 in the state in which the damper D has reached maximum extension. This space forms an air chamber G in the air spring A. In this way, the air spring A is integrated with the damper D. The air spring A constantly exerts a resilient force that acts in a direction in which the damper D is extended, and thereby biases the damper D. If the capacity of the air chamber G changes due to extension/contraction of the damper D, the resilient force of the air spring A also changes.

The circuit constitution of the damper D described above is only one example, and the circuit constitution is not limited to the above-described example. Any circuit constitution can be utilized as long as the pressure of the extension-side chamber R1 can be controlled by the extension-side pressure control valve 16 and the pressure of the contraction-side chamber R2 can be controlled by the contraction-side pressure control valve 17.

As shown in FIGS. 1 and 2, the control part C includes the following: an extension-side pressure sensor 2 that detects the pressure of the extension-side chamber R1 of the damper D; a contraction-side pressure sensor 3 that detects the pressure of the contraction-side chamber R2 of the damper D; a stroke sensor 4 that detects the stroke displacement of the damper D; an acceleration sensor 5 that detects the acceleration in the up-down direction of the sprung member B; a vibration suppression pressure calculation part 31 that calculates vibration suppression pressures Pse and Psc, which are the pressures of the extension-side chamber R1 and the contraction-side chamber R2 required to suppress vibration of the sprung member B of the vehicle; a balance pressure calculation part 32 that calculates a balance pressure Pb, which is the pressure of the extension-side chamber R1 or the contraction-side chamber R2 required to make the damper D exert a balancing force against the resilient force of the air spring A; a target pressure calculation part 33 that calculates target pressures Pe* and Pc* of the extension-side chamber R1 and the contraction-side chamber R2 from the vibration suppression pressures Pse and Psc and the balance pressure Pb; an extension-side deviation calculation part 34 that calculates a deviation εe between the target pressure Pe* of the extension-side chamber R1 and the pressure Pe detected by the extension-side pressure sensor 2; an extension-side compensation part 35 that calculates a current command Ie* from the deviation εe calculated by the extension-side deviation calculation part 34; a contraction-side deviation calculation part 36 that calculates a deviation εc between the target pressure Pc* of the contraction-side chamber R2 and the pressure Pc detected by the contraction-side pressure sensor 3; a contraction-side compensation part 37 that calculates a current command Ic* from the deviation εc calculated by the contraction-side deviation calculation part 36; an extension-side driver 38 that receives input of the current command Ie* and supplies a current according to the current command Ie* to the extension-side pressure control valve 16; and a contraction-side driver 39 that receives input of the current command Ic* and supplies a current according to the current command Ic* to the contraction-side pressure control valve 17.

The extension-side pressure sensor 2 is provided in the extension-side pressure control passage 14 more toward the extension-side chamber R1 side than the extension-side pressure control valve 16, and detects the pressure of the extension-side chamber R1. The contraction-side pressure sensor 3 is provided in the contraction-side pressure control passage 15 more toward the contraction-side chamber R2 side than the contraction-side pressure control valve 17, and detects the pressure of the contraction-side chamber R2. The locations at which the extension-side pressure sensor 2 and the contraction-side pressure sensor 3 are installed are not limited to the above-described positions, and they can be attached directly to the cylinder 11 to detect the pressures of the extension-side chamber R1 and the contraction-side chamber R2.

The stroke sensor 4 is interposed between the sprung member B and the unsprung member W in parallel with the damper D, and detects the stroke displacement of the damper D. The stroke sensor 4 may be integrated with the damper D. The acceleration sensor 5 is attached to the sprung member B, and detects the acceleration in the up-down direction of the sprung member B.

The vibration suppression pressure calculation part 31 calculates the vibration suppression pressures Pse and Psc, which are the pressures of the extension-side chamber R1 and the contraction-side chamber R2 required to suppress vibration of the sprung member B of the vehicle. In detail, skyhook control is implemented for suppressing vibration of the sprung member B. The vibration suppression pressure calculation part 31 obtains a velocity V in the up-down direction of the sprung member B by integrating the acceleration in the up-down direction of the sprung member B detected by the acceleration sensor 5, and then multiplies this velocity V by a skyhook damping coefficient Csky to calculate a damping force Fsky which should be generated by the damper D in order to suppress vibration of the sprung member B. Further, the vibration suppression pressure calculation part 31 calculates the vibration suppression pressures Pse and Psc from the damping force Fsky. In the case that the damper D is extending, if the pressure-receiving area on the extension-side chamber R1 of the piston 12 is Ae, then the necessary pressure in the extension-side chamber R1 is the damping force/the pressure-receiving area (Fsky/Ae), and the pressure of the contraction-side chamber R2 is 0. Therefore, in this case, the vibration suppression pressure calculation part 31 finds the vibration suppression pressure Pse of the extension-side chamber R1 by calculating Pse=Fsky/Ae. On the other hand, in the case that the damper D is contracting, if the pressure-receiving area on the contraction-side chamber R2 of the piston 12 is Ac, then the necessary pressure in the contraction-side chamber R2 is the damping force/the pressure-receiving area (-Fsky/Ac), and the pressure of the extension-side chamber R1 is 0. Therefore, in this case, the vibration suppression pressure calculation part 31 finds the vibration suppression pressure Psc of the contraction-side chamber R2 by calculating Psc=-Fsky/Ac. In the vibration suppression pressure calculation part 31, the vibration suppression pressure is calculated according to the skyhook control rule, but the vibration suppression pressure may be calculated according to some other control rule besides the skyhook control rule.

The balance pressure calculation part 32 calculates the balance pressure Pb, which is the pressure of the extension-side chamber R1 or the contraction-side chamber R2 required to make the damper D exert a balancing force Fb against the resilient force of the air spring A. The balancing force Fb is a force against the resilient force exerted by the air spring A in a predetermined stroke range from the state in which the air spring A reaches maximum extension, and the balancing force Fb is the force necessary for configuring the characteristics of the resilient force acting in the extension direction of the damper D to be proportional to the stroke amount of the damper D. The balancing force Fb is exerted only in a predetermined stroke range from the state in which the damper D reaches maximum extension.

Therefore, the balance pressure calculation part 32 calculates the balance pressures Pbe and Pbc necessary for exerting the balancing force Fb in the stroke range in which it is necessary make the damper D exert the balancing force Fb in accordance with the stroke of the damper D detected by the stroke sensor 4. In the stroke range in which the generation of the balancing force Fb is unnecessary, the balance pressures Pbe and Pbc are set to 0.

In detail, the balancing force Fb is calculated by Fb=Kb(Xb-Xs), wherein Kb is the spring constant of a virtual balance spring, Xb is the extension/contraction length of the virtual balance spring, and Xs is the stroke displacement from maximum extension of the damper D. If the balancing force Fb is a negative value, this indicates that the damper D is displacing in a stroke range in which the virtual balance spring does not exert a resilient force, and thus Fb=0. In the case that the damper D is in a state in which it has reached maximum extension, then Fb=Kb•Xb, and the balancing force Fb reaches a maximum. In other words, the extension/contraction length Xb of the virtual balance spring is equivalent to the length of the predetermined stroke range in which the damper D should be made to exert the balancing force Fb.

In the following, the relationship between the change in capacity of the air spring A which accompanies the extension/contraction of the damper D and the pressure of the inside of the air spring A will be considered. If the internal pressure of the air spring A when the air spring A has reached maximum extension is $Pa_0$, the capacity of the air spring A when the air spring A has reached maximum extension is $V_0$, the displacement area of the air piston 22 which accompanies the extension/contraction of the air spring A is So, the pressure of the air spring A after the change in capacity is $Pa_1$, and the stroke displacement from when the damper D has reached maximum extension is Xs, then $Pa_0 \cdot V_0 = Pa_1 \cdot (V_0 - S_0 \cdot Xs)$.

Since a force resulting from adding the resilient force generated by the air spring A and the resilient force generated by the virtual balance spring is equivalent to a force of an ideal suspension spring that elastically supports the sprung member B, when the spring coefficient of the ideal suspension spring is Kr and the internal pressure of the air spring A is $Pa_1$, the following Eq. (1) is established.

$$\frac{P_{a0} \cdot V_0 \cdot S_0}{V_0 - S_0 \cdot Xs} - Kb \cdot (Xb - Xs) = Kr \cdot Xs \quad \cdots \quad (1)$$

In Eq. (1), when the stroke displacement Xs is 0, or in other words when the damper D is in the state of maximum extension, the virtual balance spring reaches a state in which it is contracted the most, and $Pa_0 \cdot S_0 = Xb \cdot Kb$.

If $Pa_0 \cdot S_0 = Xb \cdot Kb$ is substituted into Eq. (1), then the following Eq. (2) is obtained.

$$\frac{P_{a0} \cdot S_0^2 \cdot Xs}{V_0 - S_0 \cdot Xs} + Kb \cdot Xs = Kr \cdot Xs \quad \cdots \quad (2)$$

Herein, if the capacity of the air spring A is large, then the portion "$-S_0 \cdot Xs$" in the denominator of the first item on the left side of Eq. (2) can be ignored. Thus, the approximate Eq. (3) is obtained.

$$\frac{P_{a0} \cdot S_0^2}{V_0} + Kb = Kr \quad \cdots \quad (3)$$

If $Pa_0 \cdot S_0 = Xb \cdot Kb$ is substituted again into Eq. (3) and organized around $Pa_0$, then the internal pressure $Pa_0$ of the air spring A when the damper D has reached maximum extension is as shown in Eq. (4) below. In this way, the internal pressure $Pa_0$ of the air spring A is determined by the spring coefficient Kr of the ideal suspension spring, the extension/contraction length Xb of the virtual balance spring, the capacity $V_0$ of the air spring A, and the displacement area So of the air piston 22.

$$P_{a0} = \frac{Kr \cdot V_0 \cdot Xb}{S_0 \cdot (S_0 \cdot Xb + V_0)} \quad \cdots \quad (4)$$

If Eq. (4) is substituted into Eq. (3), then the preferable spring coefficient Kb of the virtual balance spring can be found from the following Eq. (5).

$$Kb = \frac{V_0}{S_0 \cdot Xb + V_0} \cdot Kr \quad \cdots \quad (5)$$

As shown above, the spring coefficient Kb of the virtual balance spring can be set in advance. The balance pressure calculation part 32 uses the spring coefficient Kb to calculate Fb=Kb(Xb-Xs) to find the balancing force Fb. If the balancing force Fb is a negative value, then Fb=0.

After calculating the balancing force Fb as described above, the balance pressure calculation part 32 calculates the balance pressure Pb, which is the pressure of the extension-side chamber R1 or the contraction-side chamber R2 required to make the damper D exert the balancing force Fb. Specifically, if the damper D is extending, the balance pressure calculation part 32 calculates Pb=Fb/Ae from the balancing force Fb and the pressure-receiving area Ae on the extension-side chamber R1 of the piston 12, and finds the balance pressure as the pressure of the extension-side chamber R1 required to generate the balancing force Fb. If an external force is acting on the damper D in a direction to extend the damper D, the damper D outputs a counterforce to suppress the extension with the pressure of the extension-side chamber R1. In such a case, the balance pressure Pb is calculated as a pressure to be added to the pressure of the extension-side chamber R1. On the other hand, if the damper D is contracting, the balance pressure calculation part 32 calculates Pb=Fb/Ac from the balancing force Fb and the pressure-receiving area Ac on the contraction-side chamber R2 of the piston 12, and finds the balance pressure as the pressure of the contraction-side chamber R2 required to generate the balancing force Fb. If the virtual balance spring always exerts a force in a direction to contract the damper D and an external force is acting on the damper D in a direction to contract the damper D, the damper D outputs a counterforce to suppress the contraction with the pressure of the contraction-side chamber R2. Thus, in such a case, the balance pressure Pb is calculated as a pressure from which the pressure of the contraction-side chamber R2 is to be subtracted.

The target pressure calculation part 33 calculates the target pressures Pe* and Pc* of the extension-side chamber R1 and the contraction-side chamber R2 from the vibration suppression pressures Pse and Psc and the balance pressure Pb. Specifically, if the damper D is extending, the balance pressure Pb calculated by the balance pressure calculation part 32 is added to the vibration suppression pressure Pse to find the target pressure Pe* of the extension-side chamber R1. If the target pressure Pe*<0, the target pressure Pe* is set to 0. If the damper D is extending, the pressure of the contraction-side chamber R2 cannot be set to less than 0, and thus the target pressure Pc* is 0. On the other hand, if the damper D is contracting, the balance pressure Pb calculated by the balance pressure calculation part 32 is subtracted from the vibration suppression pressure Psc to find the target pressure Pc* of the contraction-side chamber R2. If the calculated target pressure Pc* is less than 0, the damper D cannot exert a force to promote contraction, and thus the target pressure Pc* is set to 0. Further, if the damper D is contracting, the pressure of the extension-side chamber R1 is 0, and thus the target pressure Pe* is 0.

The extension-side deviation calculation part 34 calculates a deviation εe by substracting the pressure Pe detected by the extension-side pressure sensor 2 from the target pressure Pe* of the extension-side chamber R1 calculated by the target pressure calculation part 33, and outputs the deviation εe to the extension-side compensation part 35.

The extension-side compensation part 35 calculates a current command Ie* from the deviation εe calculated by the extension-side deviation calculation part 34. Specifically, the extension-side compensation part 35 calculates the current command Ie* by adding the result obtained by multiplying the deviation εe by a proportional gain and the result obtained by multiplying a value obtained by integrating the deviation εe by an integration gain. In other words, the extension-side compensation part 35 is a proportional-integral compensator that performs a proportional-integral operation on the deviation εe. The extension-side compensation part 35 may be a proportional-integral-derivative compensator that performs not only a proportional-integral operation but also a derivative operation.

The contraction-side deviation calculation part 36 calculates a deviation εc by subtracting the pressure Pc detected by the contraction-side pressure sensor 3 from the target pressure Pc* of the contraction-side chamber R2 calculated by the target pressure calculation part 33, and inputs the deviation εc into the contraction-side compensation part 37.

The contraction-side compensation part 37 calculates a current command Ic* from the deviation εc calculated by the contraction-side deviation calculation part 36. Specifically, the contraction-side compensation part 37 calculates the current command Ic* by adding the result obtained by multiplying the deviation εc by a proportional gain and the result obtained by multiplying a value obtained by integrating the deviation $\varepsilon c$ by an integration gain. In other words, similar to the extension-side compensation part 35, the contraction-side compensation part 37 is also a proportional-integral compensator that performs a proportional-integral operation on the deviation $\varepsilon c$. The contraction-side compensation part 37 may be a proportional-integral-derivative compensator that performs not only a proportional-integral operation but also a derivative operation.

The extension-side driver 38 includes a PWM drive circuit and a current loop (not illustrated). The extension-side driver 38 detects a current flowing to a solenoid of the extension-side pressure control valve 16 and feedbacks the current to the current command Ie* so as to perform control such that the current flowing to the solenoid is in accordance with the current command Ie*.

The contraction-side driver 39 includes a PWM drive circuit and a current loop (not illustrated). The contraction-side driver 39 detects a current flowing to a solenoid of the contraction-side pressure control valve 17 and feedbacks the current to the current command Ic* so as to perform control such that the current flowing to the solenoid is in accordance with the current command Ic*.

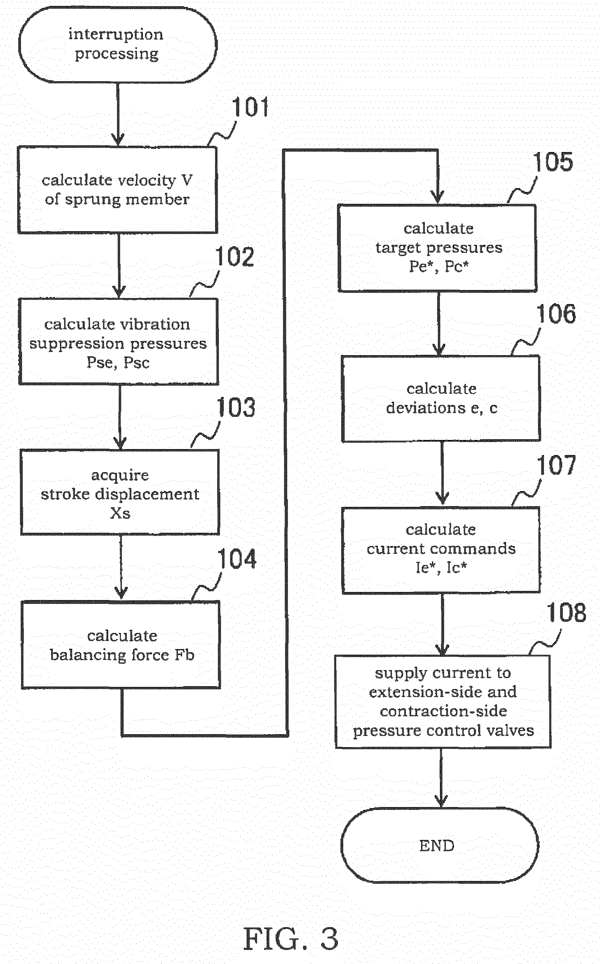

Next, the processing of the control part C will be explained based on the flowchart illustrated in FIG. 3. First, the control part C acquires the acceleration in the up-down direction of the sprung member B detected by the acceleration sensor 5, and calculates the velocity V in the up-down direction of the sprung member B (step 101). The control part C then calculates the vibration suppression pressures Pse and Psc from the obtained velocity V (step 102). Next, the control part C acquires the stroke displacement Xs of the damper D detected by the stroke sensor 4 (step 103). Next, the control part C calculates the balance pressure Pb from the stroke displacement Xs (step 104). The control part C then calculates the target pressures Pe* and Pc* of the extension-side chamber R1 and the contraction-side chamber R2 from the vibration suppression pressures Pse and Psc and the balance pressure Pb (step 105). Next, the control part C subtracts the pressure Pe detected by the extension-side pressure sensor 2 from the target pressures Pe* and Pc* to calculate the deviations $\varepsilon e$ and $\varepsilon c$ (step 106). The control part C then calculates the current commands Ie* and Ic* from the deviations $\varepsilon e$ and $\varepsilon c$ (step 107). Next, the control part C supplies currents in accordance with the current commands Ie* and Ic* to the solenoids of the extension-side pressure control valve 16 and the contraction-side pressure control valve 17 (step 108). The control part C repeatedly executes the above series of processes to control the force to be exerted by the damper D. The flowchart shown in FIG. 3 is one example of the processing of the control part C, and the processing of the control part C is not limited to the processing shown in this flowchart.

In this way, the control part C calculates the current commands Ie* and Ic* from the pressures Pe and Pc, the stroke displacement Xs, and the acceleration in the up-down direction of the sprung member B detected by the extension-side pressure sensor 2, the contraction-side pressure sensor 3, the stroke sensor 4, and the acceleration sensor 5, and respectively outputs the current commands Ie* and Ic* to the solenoids of the extension-side pressure control valve 16 and the contraction-side pressure control valve 17. As the hardware of the control part C, the constitution thereof should include: an A/D converter for acquiring the signals output by the extension-side pressure sensor 2, the contraction-side pressure sensor 3, the stroke sensor 4, and the acceleration sensor 5; a storage device such as a ROM (Read Only Memory) in which a program necessary for executing the control is stored; a computation device such as a CPU (Central Processing Unit) that executes processing based on the program; and a storage device such as a RAM (Random Access Memory) that provides a storage region to the CPU. The processing of each part of the control part C is realized by execution of the program by the CPU. The control part C may be integrated into a superordinate control device.

In the suspension device 1 of the present invention, the target pressures Pe* and Pc* of the extension-side chamber R1 and the contraction-side chamber R2 are calculated from the vibration suppression pressures Pse and Psc and the balance pressure Pb. Therefore, the damper D can be made to exert a force necessary for suppressing vibration of the sprung member B, as well as the balancing force Fb against the resilient force exerted by the air spring A in a predetermined stroke range.

In other words, according to the suspension device 1 of the present invention, the balancing force Fb, which should be exerted by a balance spring, can be virtually exerted by the damper D without actually incorporating a balance spring for exerting a force against the air spring A into the damper D.

Therefore, according to the suspension device 1 of the present invention, even in a case in which an air spring is used for the suspension spring, the riding comfort of the vehicle can be improved without using a balance spring, the weight of the overall suspension device can be decreased, and a high weight reducing effect can be achieved.

Further, under circumstances in which the sprung member B sinks down, if the damper D is extending in a predetermined stroke range, i.e. if the vibration suppression pressure Pse is Pse<0 but the balance pressure Pb is large and as a result the target pressure Pe*>0, the damper D can be made to exert the balancing force Fb against the resilient force of the air spring A acting in a direction to push up the sprung member B. Therefore, under circumstances in which the sprung member B sinks down, skyhook control can be implemented even if the damper D is in an extending state. Thus, the region over which skyhook control can be implemented can be broadened.

In addition, the damper D includes the following: the cylinder 11; the piston 12 that is slidably inserted into the cylinder 11 and partitions the inside of the cylinder 11 into the extension-side chamber R1 and the contraction-side chamber R2; the piston rod 13 that is inserted into the cylinder 11 and connected to the piston 12; the extension-side pressure control valve 16 that controls the pressure of the extension-side chamber R1; and the contraction-side pressure control valve 17 that controls the pressure of the contraction-side chamber R2. In this way, since the pressures within the extension-side chamber R1 and the contraction-side chamber R2 can be controlled independently, the balancing force Fb can be easily exerted.

Furthermore, the air spring A is formed by the air chamber 23 provided on the piston rod 13, and the air piston 22 provided on the cylinder 11. In this way, the air spring A can be integrated with the damper D, and thus the mountability of the damper D in the vehicle can be improved. The suspension device 1 may be a front fork in which the air chamber 23 is an outer tube and the air piston 22 is an inner tube which is slidably inserted into the outer tube, and the damper D is accommodated in an upright or inverted manner within the outer tube and the inner tube. If the damper D is inverted, the air chamber that constitutes the air spring A is provided on the cylinder, and the air piston is provided on the piston rod.

Embodiments of the present invention were described above, but the above embodiments are merely examples of applications of the present invention, and the technical scope of the present invention is not limited to the specific constitutions of the above embodiments.

This application claims priority based on Japanese Patent Application No. 2014-163399 filed with the Japan Patent Office on August 11, 2014, the entire contents of which are incorporated into this specification.

**Claims**

1. A suspension device, comprising:

   a damper having an extension-side chamber and a contraction-side chamber;
   an air spring configured to exert a resilient force in a direction in which the damper is extended; and
   a control part configured to independently adjust pressures of the extension-side chamber and the contraction-side chamber to control a force exerted by the damper,
   wherein the control part makes the damper exert a balancing force against the resilient force of the air spring in a predetermined stroke range of the air spring.

2. The suspension device according to claim 1, wherein the control part calculates the balancing force based on a stroke displacement of the air spring and an initial pressure at maximum extension of the air spring.

3. The suspension device according to claim 2, wherein the control part calculates target pressures of the extension-side chamber and the contraction-side chamber in consideration of the balancing force.

4. The suspension device according to claim 1, wherein the damper further comprises:

   a cylinder;
   a piston that is slidably inserted into the cylinder and partitions the inside of the cylinder into the extension-side chamber and the contraction-side chamber;
   a piston rod that is inserted into the cylinder and connected to the piston;
   an extension-side pressure control valve configured to control the pressure of the extension-side chamber; and
   a contraction-side pressure control valve configured to control the pressure of the contraction-side chamber.

5. The suspension device according to claim 4, wherein the air spring is formed by an air chamber provided on either one of the piston rod and the cylinder, and an air piston provided on the other one of the piston rod and the cylinder.

FIG. 1

FIG. 2

interruption
processing

101
calculate velocity V
of sprung member

102
calculate vibration
suppression pressures
Pse, Psc

103
acquire
stroke displacement
Xs

104
calculate
balancing force Fb

105
calculate
target pressures
Pe*, Pc*

106
calculate
deviations e, c

107
calculate
current commands
Ie*, Ic*

108
supply current to
extension-side and
contraction-side
pressure control valves

END

FIG. 3

## INTERNATIONAL SEARCH REPORT

| International application No. |
|---|
| PCT/JP2015/072489 |

A. CLASSIFICATION OF SUBJECT MATTER
*F16F15/02*(2006.01)i, *B60G13/10*(2006.01)i, *B60G17/08*(2006.01)i, *B62K25/08*(2006.01)i, *F16F15/027*(2006.01)i

According to International Patent Classification (IPC) or to both national classification and IPC

B. FIELDS SEARCHED

Minimum documentation searched (classification system followed by classification symbols)
F16F15/02, B60G13/10, B60G17/08, B62K25/08, F16F15/027

Documentation searched other than minimum documentation to the extent that such documents are included in the fields searched
Jitsuyo Shinan Koho          1922–1996   Jitsuyo Shinan Toroku Koho   1996–2015
Kokai Jitsuyo Shinan Koho    1971–2015   Toroku Jitsuyo Shinan Koho   1994–2015

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2009-269472 A  (Yamaha Motor Co., Ltd.), 19 November 2009 (19.11.2009), paragraphs [0018] to [0029]; fig. 4 to 6 (Family: none) | 1-5 |
| Y | JP 2012-211651 A  (Kayaba Industry Co., Ltd.), 01 November 2012 (01.11.2012), paragraphs [0026] to [0033], [0042]; fig. 1 (Family: none) | 1-5 |
| A | JP 6-344749 A  (Unisia Jecs Corp.), 20 December 1994 (20.12.1994), fig. 3 to 4 (Family: none) | 1-5 |

☒ Further documents are listed in the continuation of Box C.  ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 07 October 2015 (07.10.15) | 20 October 2015 (20.10.15) |

| Name and mailing address of the ISA/ | Authorized officer |
|---|---|
| Japan Patent Office 3-4-3,Kasumigaseki,Chiyoda-ku, Tokyo 100-8915,Japan | |
| | Telephone No. |

Form PCT/ISA/210 (second sheet) (July 2009)

**INTERNATIONAL SEARCH REPORT**

International application No.

PCT/JP2015/072489

C (Continuation).   DOCUMENTS CONSIDERED TO BE RELEVANT

| Category* | Citation of document, with indication, where appropriate, of the relevant passages | Relevant to claim No. |
|---|---|---|
| A | JP 6-213268 A  (Kayaba Industry Co., Ltd.), 02 August 1994 (02.08.1994), paragraph [0021]; fig. 1 (Family: none) | 1-5 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010164167 A

- JP 2014163399 A